# EUROPEAN PATENT APPLICATION

(11) **EP 3 093 580 A1**
(43) Date of publication of application: **16.11.2016**
(21) Application number: 15167655.8
(22) Date of filing: 13.05.2015
(51) Int. Cl.: F24J 2/07, F24J 2/46, F03G 6/06

(54) **ARRAY OF LINEAR DIRECT SOLAR RECEIVERS FOR HEATING A FLUID**

(71) Applicant: Areva Solar, Inc, Santa Clara, CA 95054 (US)
(72) Inventor: The designation of the inventor has not yet been filed
(74) Representative: Lavoix

(57) **Abstract**

The array comprises linear direct solar receivers (6, 8) extending parallel to each other, each receiver being configured for heating a working fluid by circulation of a fluid while being subjected to concentrated insolation, the array comprising at least one group (12) of receivers comprising several first receivers (6) and at least one second receiver (8), each second receiver (8) being fed with working fluid from several first receivers (6) in parallel, wherein the fluid inlet (8A) and the fluid outlet (8B) of each second receiver (8) are located at the opposite ends of the second receivers (8).

## Description

The present invention relates to the field of arrays of linear direct solar receivers each comprising one or several tubes for circulation of a working fluid with the working fluid being subjected to concentrated insolation using a concentrating reflector.

Such an array of receivers is used e.g. in a solar power plant. In such a solar power plant, it is possible to provide first receivers for generating vapor and second receivers fed with the vapor produced by the first receivers for superheating the vapor. The tubes of the second receivers are subjected to higher temperatures and have to be manufactured with material withstanding such high temperatures, typically ranging from 300°C to 600°C. This increases the cost of the solar power plant.

One of the objectives of the invention is to propose an array of receivers which allows heating a fluid, namely in a solar power plant, with satisfying efficiency and at reasonable cost.

To this end, the invention proposes an array of linear direct solar receivers extending parallel to each other, each receiver being configured for heating a working fluid by circulation of a fluid while being subjected to concentrated insolation, the array comprising at least one group of receivers comprising several first receivers and at least one second receiver, each second receiver being fed with working fluid from the first receivers of the group, wherein the fluid inlet and the fluid outlet of each second receiver are located at the opposite ends of the second receivers.

In specific embodiments, the array comprises one or several of the following optional features, taken in isolation or in any technically feasible combination:
- the fluid inlet and the fluid outlet of each first receiver are located at the same end of the first receiver;
- each second receiver of the group is fed by several first receivers of the group in parallel;
- the array comprises a row including first receivers, the fluid outlet of the first receivers of the row being on the same side of the row;
- the array comprises a row including second receivers, the fluid outlets of the second receivers of the row being on the same side of the row;
- the array comprises two parallel rows of receivers separated by an aisle, each of the two rows including at least one second receiver(s), the fluid outlet of the second receivers being located on the side of the aisle separating the two rows;
- the array comprises two parallel rows of receivers separated by an aisle, each of the two rows including first receivers and at least one second receiver(s), the fluid inlets of the first receivers, the fluid outlets of the first receivers and the fluid inlet of the second receivers(s) being located on the side opposite the aisle and the fluid outlet(s) of the second receiver(s) being located on the side of the aisle;
- the array comprises two parallel rows of receivers separated by an aisle, one row including exclusively first receivers and the other row including at least one second receiver (8) fed by first receiver of the other row, the fluid outlets of the first receivers and the fluid inlet of the second receivers(s) being located on the side of the aisle and the fluid outlet of the second receivers being located on the side opposite to the aisle;
- the array comprises two central rows of receivers separated by a central aisle and two side rows each separated from a respective central row by a side aisle, the second receivers being located in the central rows, each second receivers having its fluid inlet on the side of the adjacent side aisle and its fluid outlet on the side of the central aisle, each first receiver having is fluid inlet and its fluid outlet in a side aisle;
- the array comprises at least one group of receivers in which the first receivers and the second receiver(s) are arranged in two parallel rows separated by an aisle, the fluid inlet and the fluid outlet of the first receivers being adjacent the fluid inlet of the second receiver(s);
- the array comprises at least one group of receivers in which the first receivers and the second receiver(s) are arranged in two parallel rows separated by an aisle, the fluid inlet and the fluid outlet of the first receivers being adjacent to the fluid inlet of the fluid inlet of the second receiver(s) being opposite to the aisle;
- the array comprises at least one group of receivers comprising first receivers and second receivers arranged in a same row of receivers, the fluid inlet of the first receivers, the fluid outlet of the first receivers and the fluid inlet of the first receivers being on a same side of the row and the fluid outlet of the second receivers being on the other side of the row;
- the array comprises several groups of receivers arranged in one or several parallel rows of groups;
- the array comprises two rows of groups separated by a central aisle, the second receivers of the groups being arranged in rows of receivers extending along the central aisle with having their fluid inlets on the side of the aisle separating the two groups.

The invention also relates to an assembly comprising an array according to any one of the preceding claims and a user unit using the fluid exiting the second receivers.

In a particular embodiment, the user unit is a power block for producing electricity using the fluid exiting the second receivers and the assembly is a thermal solar power plant.

The invention and its advantages will be better understood on reading the following description given solely by way of example and with reference to the appended drawings in which:
- Figure 1 is a diagrammatical view of a thermal solar power plant;
- Figure 2 and 3 are diagrammatical view of alternative solar power plants.

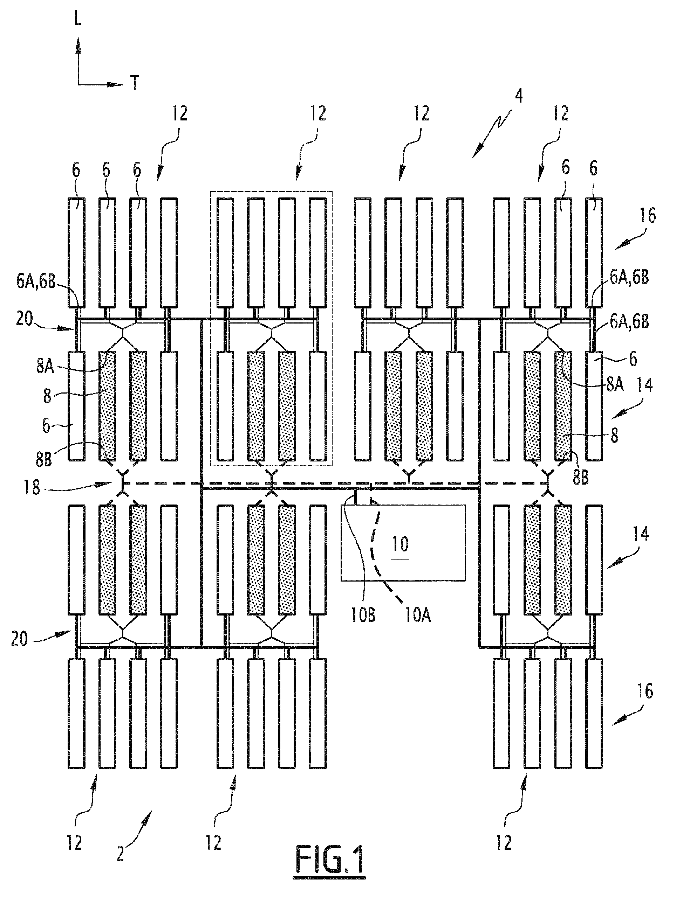

The thermal solar power plant 2 illustrated on Figure 1 comprises an array 4 of linear direct solar receivers 6, 8 for evaporating a working fluid into vapor and superheating the vapor using concentrated solar insolation and a power block 10 for producing electricity using the superheated vapor.

In a preferred embodiment, the working fluid is water. The liquid phase is referred to as "pressurized water" and the vapor is referred to as "steam".

Each linear direct solar receiver 6, 8 is elongated. The receivers 6, 8 of the array 4 are arranged parallel one to the other. The receivers 6, 8 of the array 4 extend along a same longitudinal direction L. The longitudinal direction L is preferably the north-south direction such that the receivers 6, 8 are able to track the sun's motion during the day. Each receiver 6, 8 has two longitudinal ends.

Each receiver 6, 8 comprises at least one tube extending along the longitudinal direction for circulation of working fluid through the receiver 6, 8 and a concentration reflector for reflecting and concentrating incident solar radiations onto the tube(s) for heating the working fluid.

Each receiver 6, 8 is single path, in which case the working fluid passes only once in along the reflector for being subjected to concentrated insolation, or multipath, in which case the fluid passes several time (e.g. two times) along the reflector for being subjected to concentrated insolation. A multipath receiver 6, 8 comprises parallel tubes extending along the reflector and connected in series such that the working fluid flowing in these tubes passes several times along the reflector.

Each receiver 6, 8 has a fluid inlet 6A, 8A for receiving working fluid to be subjected to concentrated insolation and a fluid outlet 6B, 8B for delivering the working fluid that has been subjected to concentrated insolation. The fluid inlet and the fluid outlet are each located at a longitudinal end of the receiver.

The fluid inlet and the fluid outlet of each receiver are located at the same longitudinal end or at opposite longitudinal ends of the receiver. If the fluid inlet and the fluid outlet are located at the same longitudinal end, the receiver is a multipath receiver with an even number of path. If the fluid inlet and the fluid outlet are located at opposite longitudinal ends of the receiver, the receiver is a single path receiver or a multipath receiver with an odd number of paths.

The array comprises first receivers 6 (in white on Figure 1) for evaporating the working fluid into vapor phase. Each first receiver 6 has a fluid inlet 6A and a fluid outlet 6B located at the same longitudinal end of the first receiver 6. In a preferred embodiment, the first receivers 6 are two-path.

The array comprises second receivers 8 (in grey on Figure 1) for superheating the working fluid in vapor phase. Each second receiver 8 has a fluid inlet 8A and a fluid outlet 8B at opposite longitudinal ends of the second receiver 8. In a preferred embodiment, the second receivers 8 are single path.

Each second receiver 8 is fed by several first receivers 6. In the solar power plant 2, the number of second receivers 8 is strictly inferior to the number of first receivers 6.

The first receivers 6 and the corresponding second receivers 8 fed by said first receivers 6 form a group of receivers 12. In each group 12, the number of second receivers 8 is strictly inferior to the number of first receivers 6.

The first receivers 6 and the second receivers 8 are arranged in rows 14, 16 of receivers arranged parallel and side-by-side. Each row 14, 16 comprises several receivers aligned in an alignment direction T. The rows 14, 16 are parallel and extend along a same alignment direction. As illustrated on Figure 1, the longitudinal direction L of the receivers of each row 14, 16 is preferably perpendicular to the alignment direction T of the rows 14, 16. Alternatively, the alignment direction may be oblique to the longitudinal direction L.

The array 4 comprises four rows 14, 16 of receivers including to intermediate rows 14 and two side rows 16 located on either sides of the intermediate rows 14. The two intermediate rows 14 delimit between them a central aisle 18. Each side row delimits with the adjacent intermediate row 14 a lateral aisle 20.

Each second receiver 8 is located in one of the intermediate rows 14. Each intermediate row 14 comprises at least one second receiver 8, here several second receivers 8.

In the embodiment of Figure 1, each intermediate row 14 here comprises first receivers 6 and second receivers 8.

Each side row 18 comprises exclusively first receivers 6.

The second receivers 8 are orientated such that the fluid inlet 8A of each second receiver 8 is located in a side aisle 20 and that the fluid outlet 8B of each second receiver 8 is located in the central aisle 18. The first receivers 6 are orientated such that the fluid inlet 6A and the fluid outlet 6B of each first receiver are located in a side aisle 20.

The first receivers 6 are orientated such that the fluid inlet 6A and the fluid outlet 6B of each first receiver 6 is located in the same aisle 20 than the fluid inlet(s) 8A of the second receiver(s) 8 fed by the first receiver 6.

In each intermediate row 14 comprising first receivers 6 and second receivers 8 fed by the first receivers 6 of the intermediate row 14, the fluid inlets of 6A the first receivers 6, the fluid outlets 6B of the first receiver 6 and the fluid inlet 8A of the second receivers 8 are located on the same side the intermediate row 14 and the fluid outlet of the second receivers 8 are located on the opposite side of the intermediate row 14.

As illustrated on Figure 1, each group 12 comprises an array of receivers 6, 8 arranged in two rows separated by an aisle, here a side row 16 and an intermediate row 14 separated by a side aisle 20.

Each group 12 comprises exclusively first receivers in the side row 16 and first receivers 6 and second receivers 8 in the intermediate row 14. The fluid inlets 6A and fluid outlets 6B of the first receivers 6 of each group 12 are located in the aisle 20 separating the two rows 14, 16 of the group 12. The fluid inlets 8A of the second receivers 8 are located in the aisle 20 separating the two rows 14, 16 of the group 12.

In the illustrated example each group is a 2x4 array of receivers 6, 8 including six first receivers 6 and two second receivers 8. The ratio of first receivers 6 to second receivers 8 is thus 3:1. Each intermediate row 14 comprises first receivers 6 and second receivers 8 in a 1:1 ratio.

The groups 12 are arranged in two rows of groups 12 separated by the central aisle 18 with the fluid outlets of the groups 12, i.e. the fluid outlets 8B of the second receivers located in the central aisle 18 separating the two rows of groups 12.

The power block 10 replaces one of the groups in the array of groups. The array of groups is here a 4x4 array of groups, with one group replaced by the power block 10.

In practice, the power block 10 is of small dimensions as compared to each group 12 and the power block 10 may be located in the central aisle 18 between two rows of groups 12, without replacing a group in the array of groups.

The power block 10 has a fluid inlet 10A fed with superheated vapor by the second receivers 8 and a fluid outlet 10B feeding the fluid inlets 6A of the first receivers 6 with working fluid in liquid phase.

The fluid inlet 10A of the power block 10 is located in the central aisle 18 in which the fluid outlets 8B of the second receivers 8 are located and which separates the two rows of groups 12. The fluid inlet 10A of the power block 10 is thus located adjacent the fluid outlets 8B of the second receivers 8.

In the array 4, the second receivers 8 are arranged in the two intermediate rows 14 of receivers separated by the central aisle 18 with the fluid outlets 8A of the second receivers located in a said central aisle 18.

This allows providing a short path between the second receivers 8 and the power block 10 thus minimizing thermal losses for better efficiency and minimizing the length of tubes for transporting the superheated gaseous phase at high temperature, typically comprises between 300° and 600° when the working fluid is water, thus minimizing costs.

The fluid outlet 6B of each the first receiver 6 is located in the same aisle 20 as the fluid inlet 8A of the second receiver 8 fed by said first receiver 6. This further allows reducing thermal losses between the first receivers 6 and the second receivers 8.

The fluid inlet 8A of each second receiver 8 is located opposite the fluid outlet 8B of the second receiver 8. This allows providing several first receivers 6 feeding a second receiver 8 with the fluid outlets 6B of the first receivers 6 adjacent the fluid inlet 8A of the second receiver 8, thus reducing length of the tubes between the first receivers 6 and the second receivers 8 and reducing thermal losses and reducing costs.

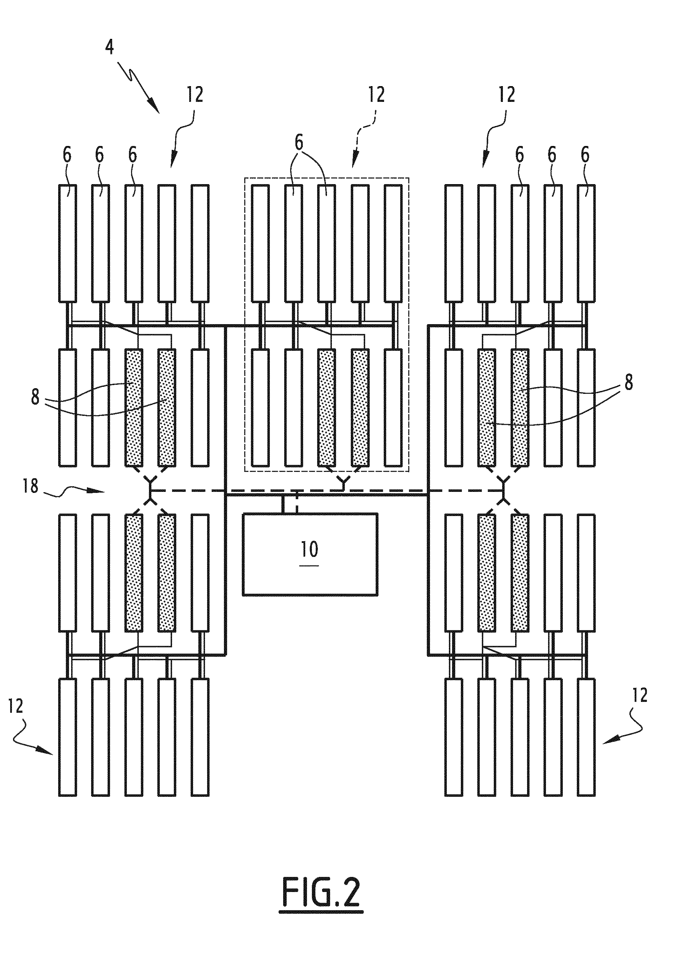

The solar power plant illustrated on Figure 2 differs from that of Figure 1 by the fact that the receivers are gathered in five groups 12, each group 12 comprising first receivers and second receivers in a 4:1 ratio. Each group 12 comprises a 5x2 array of receivers, with one row comprising exclusively first receivers 6 and the other row comprising first receivers 6 and second receivers 8.

The power block 10 here replaces one group 12 in an 3x2 array of groups, but the power block 10 may be placed in a central aisle 18 instead.

Other variants are possible.

Preferably, the solar power plant comprises one single row of groups or two rows of groups, each group comprising one single row of receivers or two rows of receivers.

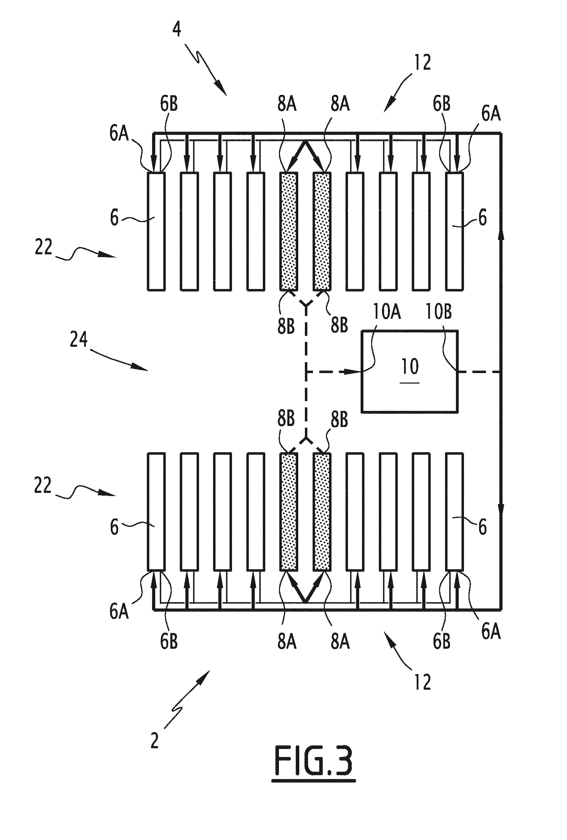

In a variant illustrated on Figure 3, a solar power plant comprises two groups 12 each comprising first receivers 6 and second receivers 8 arranged in a same row 22 of receivers with the fluid inlets 6A of the first receivers 6, the fluid outlets 6B of the first receivers and the fluid inlet(s) of the second receiver(s) located on one side of the row 22, and the fluid outlet 8B of the second receiver(s) 8 located on the other side of the row 22.

The receivers 6, 8 of the two groups 12 are located in one respective row 22, the two rows 22 being separated by a central aisle 24. The fluid outlets 8B of the second receivers 8 are located in the central aisle. The fluid inlets 6A of the first receivers 6, the fluid outlets 6B of the first receivers 6 and the fluid inlets 8A of the second receivers 8 are opposite the central aisle 24.

The power block 10 is located on the side of each row 22 where the fluid outlet(s) of the second receivers(s) 8 are located. The power block 10 is located in the central aisle 24. The two groups 12 are placed on either sides of the power block 10.

In a variant, the groups 12 of receivers are not arranged in rows of receivers.

The invention is not limited to the examples described above.

In particular, the invention is described in the context of a solar power plant in which the first receivers 6 are used to produce vapor of a working fluid, namely water, and the second receivers 8 are used to superheat the vapor.

However, the array of first receivers 6 and second receivers 8 may be used to heat a fluid, e.g. a molten salt, without vaporization, with the same or similar advantages. In such case, the first receivers 6 are provided to heat the fluid to a first temperature and the second receivers 8 a provided to heat the fluid to a second temperature higher than the first temperature.

Besides, the fluid heated by the array of receivers may be used to feed a user unit different from a power block. The fluid may e.g. be used to feed an industrial plant performing an industrial process which needs a large amount of heat.

The array of receivers of the invention allows to lower thermal losses and to shorten the length of pricy tubes for circulating high temperature fluid.

The array of receivers further allows shortening the lag in the temperature and/or pressure of the fluid at the outlet of the second receivers 8 depending on the varying insolation. In particular, this allows adjusting precisely and rapidly the temperature and the pressure at the inlet of a turbine in a solar power plant.

## Claims

1. Array of linear direct solar receivers (6, 8) extending parallel to each other, each receiver being configured for heating a working fluid by circulation of a fluid while being subjected to concentrated insolation, the array comprising at least one group (12) of receivers comprising several first receivers (6) and at least one second receiver (8), each second receiver (8) being fed with working fluid from the first receivers (6) of the group, wherein the fluid inlet (8A) and the fluid outlet (8B) of each second receiver (8) are located at the opposite ends of the second receivers (8).

2. Array according to claim 1, wherein the fluid inlet (6A) and the fluid outlet (6B) of each first receiver (6) are located at the same end of the first receiver (6).

3. Array according to claim 1 or 2, wherein each second receiver (8) of the group (12) is fed by several first receivers (6) of the group in parallel.

4. Array according to any one of the preceding claims, comprising a row (14, 16; 22) of receivers (6, 8) including first receivers (6), the fluid outlet of the first receivers of the row being on the same side of the row.

5. Array according to any one of the preceding claims, comprising a row (14, 22) of receivers (6, 8) including second receivers (8), the fluid outlets of the second receivers of the row being on the same side of the row (14, 22).

6. Array according to any one of the preceding claims, comprising two parallel rows (14, 22) of receivers (6, 8) separated by an aisle (18), each of the two rows including at least one second receiver(s) (8), the fluid outlet of the second receivers (8) being located on the side of the aisle separating the two rows.

7. Array according to any one of the preceding claims, comprising two parallel rows (14, 22) of receivers separated by an aisle (18, 24), each of the two rows including first receivers (6) and at least one second receiver(s) (8), the fluid inlets of the first receivers (6), the fluid outlets of the first receivers (6) and the fluid inlet of the second receivers(s) (8) being located on the side opposite the aisle (18, 24) and the fluid outlet(s) of the second receiver(s) (8) being located on the side of the aisle (18, 24).

8. Array according to any one of the preceding claims, comprising two parallel rows (14, 16) of receivers separated by an aisle (20), one row including exclusively first receivers (6) and the other row including at least one second receiver (8) fed by first receiver (6) of the other row, the fluid outlets of the first receivers (6) and the fluid inlet of the second receivers(s) being located on the side of the aisle (20) and the fluid outlet of the second receivers (8) being located on the side opposite to the aisle (20).

9. Array according to any one of the preceding claims, comprising two central rows (14) of receivers (6, 8) separated by a central aisle (18) and two side rows (16) of receivers (6, 8) each separated from a respective central row (14) by a side aisle (20), the second receivers (8) being located in the central rows (14), each second receivers (18) having its fluid inlet on the side of the adjacent side aisle (20) and its fluid outlet on the side of the central aisle (18), each first receiver(6) having is fluid inlet and its fluid outlet in a side aisle (18).

10. Array according to any one of the preceding claims, comprising at least one group (12) of receivers in which the first receivers and the second receiver(s) are arranged in two parallel rows separated by an aisle, the fluid inlet and the fluid outlet of the first receivers being adjacent the fluid inlet of the second receiver(s).

11. Array according to any one of the preceding claims, comprising at least one group (12) of receivers in which the first receivers and the second receiver(s) are arranged in two parallel rows separated by an aisle, the fluid inlet and the fluid outlet of the first receivers being adjacent to the fluid inlet of the fluid inlet of the second receiver(s) being opposite to the aisle.

12. Array according to any one of the preceding claims, comprising at least one group (12) of receivers comprising first receivers and second receivers arranged in a same row of receivers, the fluid inlet of the first receivers, the fluid outlet of the first receivers and the fluid inlet of the first receivers being on a same side of the row and the fluid outlet of the second receivers being on the other side of the row.

13. Array according to any one of the preceding claims, comprising several groups (12) of receivers arranged in one or several parallel rows of groups.

14. Array according to any one of the preceding claims, comprising two rows of groups of receivers separated by a central aisle (18, 24), the second receivers of the groups (12) being arranged in rows of receivers extending along the central aisle (18, 24) with having their fluid inlets on the side of the aisle separating the two groups (12).

15. Assembly comprising an array according to any one of the preceding claims and a user unit (10) using the fluid exiting the second receivers (8), namely a power block (10) for producing electricity using the fluid exiting the second receivers (8).
